# EUROPÄISCHE PATENTSCHRIFT

(11) **EP 3 439 822 B1**
(45) Veröffentlichungstag und Bekanntmachung des Hinweises auf die Patenterteilung: **05.06.2024**
(21) Anmeldenummer: 17709939.7
(22) Anmeldetag: 08.03.2017
(51) Int. Cl.: B23K 26/384, B23K 26/08, B21J 5/06, B23K 37/047, B23K 37/053, B23K 101/06, B23K 101/18

(54) **VERFAHREN ZUM SCHNEIDENDEN BEARBEITEN VON PLATTENFÖRMIGEN ODER STABFÖRMIGEN WERKSTÜCKEN**
METHOD OF MACHINE-CUTTING WORKPIECES IN PLATE FORM OR BAR FORM
PROCÉDÉ D'USINAGE PAR DÉCOUPE DE PIÈCES EN FORME DE PLAQUES OU DE BARRES

(30) Priorität: 04.04.2016 DE 102016106067
(43) Veröffentlichungstag der Anmeldung: 13.02.2019
(73) Patentinhaber: TRUMPF Werkzeugmaschinen SE + Co. KG, 71254 Ditzingen (DE)
(72) Erfinder: RUETZ, Karsten, 71640 Ludwigsburg (DE); BEIER, Norbert, 71735 Eberdingen (DE); HOHENADEL, Jürgen, 71254 Ditzingen (DE); REINWALD, Simon, 75365 Calw (DE); JARSCH, Florian, 71254 Ditzingen (DE)
(74) Vertreter: Mammel und Maser Patentanwälte PartG mbB
(86) Internationale Anmeldenummer: PCT/EP2017/055388
(87) Internationale Veröffentlichungsnummer: WO 2017/174283

(56) Entgegenhaltungen:
- EP-A1- 2 017 023
- DE-A1- 19 634 417
- DE-A1-102013 111 186

## Beschreibung

### Verfahren und Bearbeitungsmaschine zum schneidenden Bearbeiten von plattenförmigen oder stabförmigen Werkstücken

Die Erfindung betrifft ein Verfahren zur schneidenden Bearbeitung von plattenförmigen oder stabförmigen Werkstücken in einer Bearbeitungsmaschine.

Aus der DE 10 2013 111 186 A1 ist eine Laserschneidanlage mit einem Tisch zur Aufnahme eines zu schneidenden Bleches bekannt. Diese umfasst ein Portal, welches einen in einer liegenden Ebene in XY-Richtung oberhalb des Tisches verfahrbaren Laserschneidkopf aufweist. Getrennt von diesem Laserschneidkopf ist ein Zusatzbearbeitungswerkzeug vorgesehen. Durch den Laserschneidkopf werden die Werkstücke aus dem zu schneidenden Blech herausgeschnitten. Durch das Zusatzbearbeitungswerkzeug werden Bearbeitungsschritte in der Laserschneidanlage durchgeführt, die bislang in einer weiteren Bearbeitungsstation erfolgt sind.

Aus der DE 196 34 417 A1 ist ein Verfahren zum Verbinden von dünnwandigen Werkstücken bekannt, um auf einfache und kostengünstige Weise eine Festigkeitserhöhung einer derartigen Verbindung zu ermöglichen. Zwei geschlossene Bleche werden übereinander positioniert, um darauffolgend mit einem Fließformwerkzeug eine Bohrung einzubringen und die beiden Bleche im aneinanderliegenden Bereich zu verbinden. Eine Ausnehmung wird in das Werkstück vor dem Einbringen der Fließbohrung eingebracht.

Aus der EP 2 017 023 A1 ist eine Bearbeitungsmaschine bekannt, welche zur Bearbeitung von stabförmigen Werkstücken, insbesondere Rohren, vorgesehen ist. Bei dieser Bearbeitungsmaschine handelt es sich um eine Laserrohrschneidmaschine. Die stabartigen Werkstücke werden über eine Werkstückabstützung aufgenommen, welche als Rollenabstützung ausgebildet ist. Eine Werkstückbewegungseinrichtung führt das stabartige Werkstück einem Durchschiebefutter zu und hindurch, so dass auf einer gegenüberliegenden Seite des Durchschiebefutters eine Werkstückbearbeitung mit einer Laserbearbeitungsvorrichtung erfolgt. Nach dem Bearbeiten des Werkstücks mit einem Laserstrahl wird dieses abgestochen und in eine Entladevorrichtung übergeführt.

Aus der DE 10 2013 103 121 A1 ist des Weiteren eine Bearbeitungsmaschine zur Bearbeitung von plattenförmigen Werkstücken mit einer Laserbearbeitungsvorrichtung bekannt. Diese Bearbeitungsmaschine weist zur Werkstückabstützung des plattenförmigen Materials eine flächige Werkstückauflage auf. Oberhalb des plattenförmigen Materials ist die Laserbearbeitungsvorrichtung vorgesehen, welche ein Stanzkopf und ein Laserbearbeitungskopf aufweist, um eine Laser- und/oder Stanzbearbeitung am plattenförmigen Werkstück durchzuführen.

Zur Einbringung eines Gewindes in stabförmige Werkstücke, insbesondere rohrförmige Werkstücke, als auch plattenförmige Werkstücke mit einer hohen Präzision ist es erforderlich, dass ein präzises Bohrloch eingebracht wird. Darüber hinaus ist es vielfach nachteilig, wenn beim Einbringen eines Bohrloches mittels eines Spiralbohrers durch die spanabhebende Bearbeitung Späne anfallen. Durch das Einbringen eines Bohrloches mittels einem Fließbohrer ist zwar die Herstellung eines präzisen Bohrloches möglich, jedoch ist aufgrund der hohen axialen Kräfte beim Eindringen einer kegelförmigen Spitze des Fließbohrers in die Wand des rohrförmigen Werkstückes bzw. des plattenförmigen Materials eine hohe Abstützkraft erforderlich, die der Axialkraft während dem zwangsweisen Eindringen des Fließbohrers in das Werkstück entgegenwirkt.

Der Erfindung liegt die Aufgabe zugrunde, ein Verfahren zur schneidenden Bearbeitung von plattenförmigen oder stabförmigen Werkstücken vorzuschlagen, durch welche ein Bohrloch mit einer hohen Präzision hergestellt und die dabei wirkende Axialkraft verringert wird.

Diese Aufgabe wird durch ein Verfahren zur schneidenden Bearbeitung von plattenförmigen oder stabförmigen Werkstücken gelöst, bei welchen über einen Bearbeitungskopf einer Laserbearbeitungsvorrichtung ein Laserstrahl auf das zu bearbeitende Werkstück gerichtet und eine Ausnehmung in das Werkstück eingebracht wird und darauffolgend die Ausnehmung mit einem Fließbohrer auf ein Endmaß eines Bohrloches aufgeweitet wird. Dieses Verfahren weist den Vorteil auf, dass durch die lasergeschnittene Ausnehmung eine definierte Positionsgenauigkeit für das herzustellende Bohrloch ermöglicht wird. Zudem wird die Prozesskraft bzw. die Axialkraft, welche beim Aufweiten der Ausnehmung auf ein Endmaß des Bohrloches auf das plattenförmige oder rohrförmige Material wirkt, erheblich verringert, da bereits eine Ausnehmung eingebracht worden ist. Darüber hinaus weist das vorherige Einbringen einer Ausnehmung in das Werkstück und das nachfolgende Fließbohren den Vorteil auf, dass ein Aufwurf beim Fließbohren auf ein geringes Maß, insbesondere auf wenige Zehntel Millimeter, reduziert wird. Ein spanendes Entfernen des Aufwurfes ist dabei nicht mehr erforderlich.

Nach einer vorteilhaften Ausführungsform des Verfahrens ist vorgesehen, dass die mit dem Laserstrahl hergestellte Ausnehmung mit einer maximalen Größe in das Werkstück eingebracht wird, deren Hüllkreis kleiner als das Endmaß des Bohrloches ist. Dadurch kann eine homogen umlaufende Mantelfläche des Bohrloches über die gesamte Wandstärke des Werkstückes gegeben sein.

Nach dem Einbringen des Bohrloches wird bevorzugt ein Gewinde durch ein Gewindeschneidwerkzeug oder ein Gewindeformwerkzeug eingebracht. In Abhängigkeit der verwendeten Materialien für das Werkstück kann das Gewindeschneiden oder Gewindeformen ausgewählt werden. Beispielsweise bei einem Werkstück aus Baustahl kann ein Gewindeschneidwerkzeug eingesetzt werden. Bei hochfesten Baustählen oder auch bei dickeren Wandstärken wird bevorzugt ein Gewindeformwerkzeug eingesetzt.

Eine weitere bevorzugte Ausgestaltung des Verfahrens sieht vor, dass durch den Laserstrahl eine Ausnehmung mit parallelen, sich verjüngenden oder sich aufweitenden, die Ausnehmung begrenzenden Wandabschnitten in das Werkstück eingebracht wird. Dadurch können weitere spezifische Anforderungen erfüllt werden. Durch eine Bearbeitungsmaschine mit einer Pendelachse für den Bearbeitungskopf können verschiedene Flankensteigungen für die Wandabschnitte in der Ausnehmung eingebracht werden.

Das Verfahren sieht erfindungsgemäß vor, dass die Ausnehmung durch den Laserstrahl mit einer polygonen Kontur oder einer unrunden Kontur hergestellt wird. Dies ermöglicht, dass die Form und Geometrie der Ausnehmung auch an den Einbringungsort an dem Werkstück angepasst werden kann. Insbesondere bei Rohren kann aufgrund der Krümmung der äußeren Mantelfläche eine Ausnehmung in einer Richtung eine Vorzugsrichtung aufweisen, die größer ist als in die andere Richtung.

Die Kontur der Ausnehmung und/oder die Flankensteigung des die Ausnehmung begrenzenden Wandabschnitts des Werkstücks wird bevorzugt in Abhängigkeit der Topografie ausgewählt und abgestimmt. Insbesondere steht die Kontur der Ausnehmung und/oder der Flankensteigung des die Ausnehmung begrenzenden Wandabschnitts in Abhängigkeit der Oberflächenkrümmung des zu bearbeitenden Werkstücks. Dadurch kann eine weitere Verringerung der Axialkräfte beim Bearbeiten der Ausnehmung auf ein Endmaß oder bei der Fertigbearbeitung der Ausnehmung ermöglicht sein.

Das plattenförmige Werkstück, in welches die Ausnehmung und das Bohrloch einzubringen ist, wird bevorzugt in einer Stanz- Laser-Bearbeitungsmaschine mit einem Flachbett als Werkstückauflage bearbeitet.

Ein stab- oder rohrförmiges Werkstück wird bevorzugt in einer Laserrohrschneidemaschine mit einer Rollenzuführung für das stabförmige oder rohrförmige Werkstück als Werkstückabstützung und einem Durchschiebefutter zur Führung des Werkstücks bearbeitet.

Des Weiteren ist bevorzugt vorgesehen, dass die sich gegenüberliegenden Wandabschnitte der Ausnehmung in einer Vorschubrichtung der Laserrohrschneidmaschine eine andere Flankensteigung und/oder eine andere Distanz zueinander aufweisen, als die sich gegenüberliegenden Wandabschnitte der Ausnehmung in einer Drehrichtung der Laserrohrschneidmaschine. Dadurch kann die Positionsgenauigkeit des Bohrlochs erhöht und ein Werkzeugverschleiß weiter reduziert werden.

Eine nicht beanspruchte Bearbeitungsmaschine zur Durchführung des vorbeschriebenen Verfahrens wird dargestellt, bei welchem in einem Bearbeitungsbereich eines Bearbeitungskopfes der Laserbearbeitungsvorrichtung oder benachbart zu diesem Bearbeitungskopf, der einen Laserstrahl ausgibt und auf das zu bearbeitende Werkstück richtet, eine verfahrbare Werkzeugaufnahme vorgesehen ist, welche zur Bearbeitung einer durch den Laserstrahl eingebrachten Ausnehmung in eine Bearbeitungsposition zum Werkstück für eine nachfolgende Bearbeitung verfahrbar ist. Dadurch kann das Werkstück mittels einer Aufspannung bearbeitet werden, das heißt, dass zunächst die Ausnehmung eingebracht und darauffolgend das Bohrloch auf ein Endmaß fertiggestellt wird. Durch die Aufrechterhaltung derselben Aufspannung kann eine hohe Positionsgenauigkeit und somit eine Präzision in der Einbringung des Bohrloches erzielt werden.

Die Werkzeugaufnahme ist durch eine zumindest in einer Achse verfahrbare Führung aufgenommen und zur Bearbeitungsposition positionierbar. In Abhängigkeit des zur Verfügung stehenden Einbauraums oder den Anforderungen kann ein Ein- oder Mehrachssystem vorgesehen sein.

Des Weiteren ist bevorzugt vorgesehen, dass die Werkzeugaufnahme zwischen einer Bearbeitungsposition zum Werkstück und einem Magazin verfahrbar ist, welches zum Speichern von mehreren Werkzeugen vorgesehen ist.

Die Bearbeitungsmaschine ist gemäß einer ersten Ausführungsform als eine Stanz- Laser- Bearbeitungsmaschine mit einem Flachbett zur Aufnahme des zu bearbeitenden plattenförmigen Materials ausgebildet. Durch die Bereitstellung von einem Fließbohrer in einem Magazin kann in das plattenförmige Material mittels der Werkzeugaufnahme nach dem Einbringen der Aufnahme ein Bohrloch auf ein Endmaß bearbeitet werden.

Die Bearbeitungsmaschine kann ebenso als eine Laserrohrschneidmaschine mit einer als Rollenabstützung ausgebildeten Werkstückabstützung zur Zuführung der stabförmigen, insbesondere rohrförmigen, Werkstücken vorgesehen sein, welche durch eine Durchschiebeeinrichtung zu einem Bearbeitungsraum geführt sind, wobei benachbart zum Bearbeitungskopf oder in einem Bearbeitungsraum eine Werkstückaufnahme an die Durchschiebeeinrichtung angrenzend vorgesehen ist, die der Werkstückabstützung gegenüberliegt. Dadurch können wiederum mittels einer Einspannung des stabförmigen Werkstücks die Einbringung der Aufnahme und nachfolgend die Einbringung des Bohrloches erfolgen. Dabei können die Einbringung der Ausnehmung und die Herstellung des Endmaßes des Bohrloches mit dem Fließbohrers von derselben Bearbeitungsrichtung erfolgen. Alternativ kann auch vorgesehen sein, dass das stabförmige Material nach dem Einbringen der Ausnehmung mittels des Laserstrahls beispielsweise um einige Winkelgrade, insbesondere 90°, gedreht wird, so dass daraufhin durch eine Zustellbewegung der Werkzeugaufnahme mittels dem Fließbohrer das Bohrloch auf Endmaß bearbeitet wird.

Die Erfindung sowie weitere vorteilhafte Ausführungsformen und Weiterbildungen derselben werden im Folgenden anhand der in den Zeichnungen dargestellten Beispiele näher beschrieben und erläutert.

Es zeigen:
Figur 1 eine perspektivische Ansicht einer ersten Ausführungsform der Bearbeitungsmaschine mit einer Laserbearbeitungsvorrichtung,
Figur 2 eine schematische Seitenansicht eines Bearbeitungsraumes der Laserbearbeitungsmaschine gemäß Figur 1,
Figur 3 eine perspektivische Ansicht eines stabförmigen Werkstückes mit einer eingebrachten Ausnehmung,
Figur 4a eine nicht zur Erfindung gehörige schematische Ansicht einer Kontur der Ausnehmung,
Figur 4b - f schematische Ansichten von verschiedenen Konturen der Ausnehmung,
Figur 5a - cschematische Schnittansichten von verschiedenen Ausrichtungen von Wandabschnitten der Ausnehmung,
Figur 6 eine schematische Schnittansicht eines auf Endmaß hergestellten Bohrlochs im Werkstück,
Figur 7 eine schematische Schnittdarstellung eines in das Bohrloch gemäß Figur 6 eingebrachten Gewindes im Werkstück, und
Figur 8 eine perspektivische Ansicht einer alternativen Bearbeitungsmaschine zu Figur 1

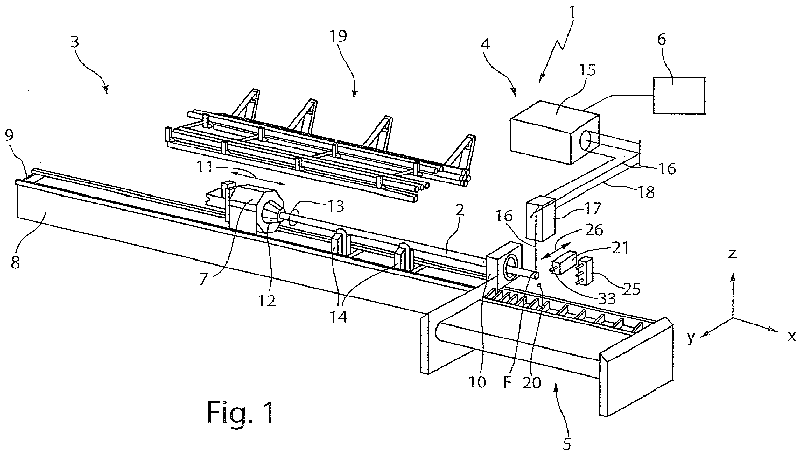

In Figur 1 ist schematisch vereinfacht, eine Laserbearbeitungsmaschine 1 dargestellt. Diese Laserbearbeitungsmaschine 1 ist zum schneidenden Bearbeiten von Werkstücken 2 vorgesehen, wobei die Werkstücke 2 stabförmig, insbesondere rohrförmig, ausgebildet sind. Als stabförmig sind insbesondere aber auch Profile zu verstehen. Diese Laserbearbeitungsmaschine 1 umfasst eine Zuführeinrichtung 3 zur seitlichen Zufuhr des zu schneidenden Werkstücks 2 zur Laserbearbeitungsmaschine 1, beispielsweise durch eine Beladevorrichtung 19. Diese Zuführeinrichtung 3 führt das zu schneidende Werkstück 2 einer Bearbeitungsvorrichtung 4 zum Laserschneiden des Werkstücks 2, insbesondere von Stababschnitten oder Rohrteilen, zu. Diese werden über eine Entladevorrichtung 5 aufgenommen und aus der Laserbearbeitungsmaschine 1 abgeführt. Alle wesentlichen Funktionen der Laserbearbeitungsmaschine 1 werden mit einer nummerischen Steuerungseinrichtung 6 gesteuert.

Die Zuführvorrichtung 3 umfasst eine als Werkstück-Bewegungseinrichtung 7 dienende Dreh- und Vorschubeinrichtung sowie ein Maschinenbett 8 mit Führungsschienen 9 und eine Durchschiebeeinrichtung 10. Die Werkstück-Bewegungseinrichtung 7 ist motorisch angetrieben und in Vorschubrichtung 11 auf den Führungsschienen 9 verfahrbar. Das zuzuführende Werkstück 2 ist mit einer Spanneinrichtung 12 der Werkstück-Bewegungseinrichtung 7 fixiert, die in Richtung des Doppelpfeiles 13 drehbar ist und das zugeführte Werkstück 2 von außen umfasst und ortsfest klemmt. Das stabförmige Werkstück 2 wird während der Zuführung des Werkstücks 2 zur Durchschiebeeinrichtung 10 und/ oder während der Bearbeitung des Werkstücks 2 von mindestens einer in dem Maschinenbett 8 integrierten Werkstückabstützung 14 abgestützt. Im Bereich der Bearbeitungsvorrichtung 4 wird das Werkstück 2 durch die Durchschiebeeinrichtung 10 geführt und durch diese abgestützt. Die Durchschiebeeinrichtung 10 ist so ausgelegt, dass das eingespannte Werkstück 2 in Vorschubrichtung geführt und nicht ortsfest geklemmt ist. Das stabförmige Werkstück 2 ist in der Durchschiebevorrichtung 10 um die Drehachse drehbar.

Die Bearbeitungsvorrichtung 4 umfasst eine Laserstrahlquelle 15 zum Erzeugen eines Laserstrahls 16, einen Bearbeitungskopf 17 und eine Strahlführung 18, die den Laserstrahl 16 von der Laserstrahlquelle 15 zum Bearbeitungskopf 17 führt. Der Laserstrahl 16 tritt aus dem Bearbeitungskopf 17 aus und wird an einer Bearbeitungsstelle F innerhalb eines Bearbeitungsraumes 20 auf die Außenumfangfläche des stabförmigen Werkstücks 2 fokussiert.

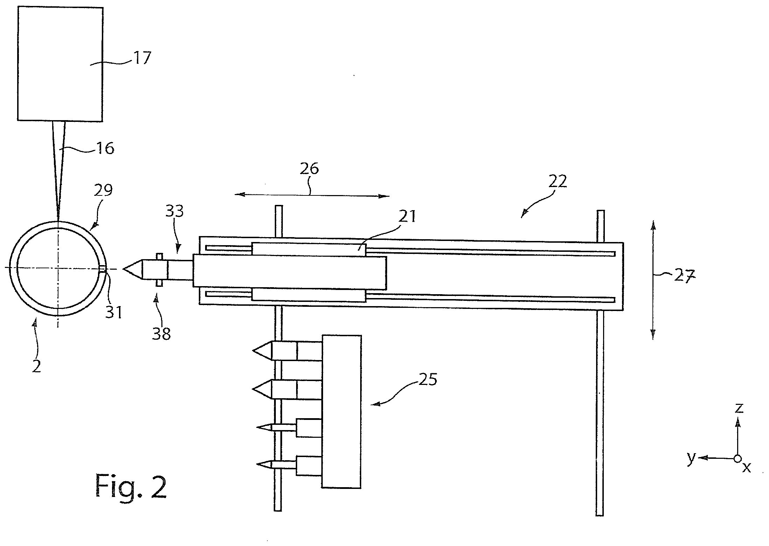

Dem Bearbeitungsraum 20 zugeordnet und/oder benachbart zum Bearbeitungskopf 17 ist eine Werkzeugaufnahme 21 vorgesehen, welche mittels einer Führung 22 (Figur 2) zumindest innerhalb des Bearbeitungsraumes 20 verfahrbar ist, so dass die Werkzeugaufnahme 21 mit einem darin eingespannten Werkzeug 33 zur Bearbeitungsstelle F verfahrbar ist und wiederum von dieser entfernt werden kann.

Entfernt von der Bearbeitungsstelle F ist des Weiteren ein Magazin 25 vorgesehen. Dieses Magazin 25 kann beispielsweise als ein Linearmagazin oder Revolvermagazin ausgebildet sein. In diesem Magazin 25 können verschiedene Werkzeuge 33, wie beispielsweise Bohrer, Fließbohrer, Gewindeschneidwerkzeuge oder Gewindeformwerkzeuge, gespeichert sein. Die Werkzeugaufnahme 21 ist gemäß dem dargestellten Doppelpfeil 26 in Y-Richtung zumindest zwischen dem Magazin 25 und der Bearbeitungsstelle F verfahrbar. Zur Verwendung eines Linearmagazins 25 kann die Werkzeugaufnahme 21 zudem in Z-Richtung entlang des Doppelpfeils 27 verfahrbar sein. Alternativ kann auch das Linearmagazin 25 in Z-Richtung verfahrbar sein.

Auf der dem Maschinenbett 8 abgewandten Seite der Durchschiebeeinrichtung 10 ist die Entladevorrichtung 5 vorgesehen, die aus dem stabförmigen Werkstück 2 geschnittene Werkstückteile oder - abschnitte sowie ein Restwerkstück aus der Laserbearbeitungsmaschine 1 abführt.

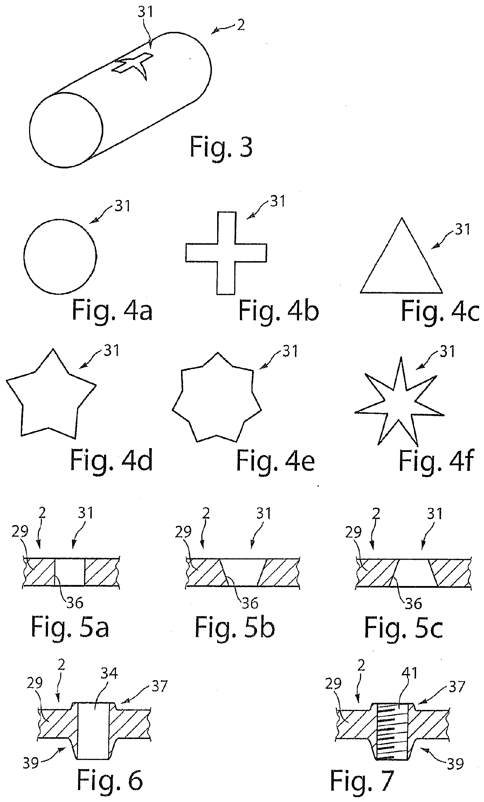

In Figur 2 ist eine schematische Seitenansicht in den Bearbeitungsraum 20 der Laserbearbeitungsmaschine 1 schematisch vereinfacht dargestellt. Auf ein stabförmiges Werkstück 2, beispielsweise ein Rohr, ist der Bearbeitungskopf 12 ausgerichtet, der beispielsweise senkrecht oberhalb des Werkstücks 2 vorgesehen ist. Mittels eines auf das Werkstück 2 ausgerichteten Laserstrahls 16 wird in eine Wand 29 des rohrförmigen Werkstücks 2 eine Ausnehmung 31 eingebracht. Beispielsweise um 90° versetzt zum Bearbeitungskopf 17 ist die Werkzeugaufnahme 21 ausgerichtet. Die Werkzeugaufnahme 21 ist beispielsweise entlang einer Y-Achse und einer Z-Achse der Führung 22 verfahrbar aufgenommen. Die Werkzeugaufnahme 21 nimmt einen Fließbohrer 33 auf. Zum Bearbeiten der Ausnehmung 31 ist das rohrförmige Werkstück durch die Werkstück-Bewegungseinrichtung 7 um 90° gedreht worden. In Abhängigkeit der Positionierung der Werkzeugaufnahme 21 entlang der X-Achse relativ zum Bearbeitungskopf 17 kann zusätzlich noch eine Verfahrbewegung des Werkstücks 2 durch die Werkstückbewegungseinrichtung angesteuert werden, so dass die Ausnehmung 31 zu einer Längsachse des Fließbohrers 33, der von der Werkzeugaufnahme 21 gehalten ist, fluchtend ausgerichtet ist. Ausgehend von dieser in Figur 2 dargestellten Position wird mittels einer Vorschubbewegung der Werkzeugaufnahme 21 in Richtung auf das Werkstück 2 die Ausnehmung 31 aufgeweitet und mit dem Fließbohrer 33 ein Bohrloch 34 auf Endmaß bearbeitet, wie dies nachfolgend in Figur 6 näher beschrieben wird.

Benachbart zur Werkzeugaufnahme 21 ist beispielsweise das Magazin 25 schematisch dargestellt, welche verschiedene Werkzeuge aufnehmen kann.

Die Werkzeugaufnahme 21 kann an einer ein- oder mehrachsigen Linearführung oder an einer sonstigen Handlingseinrichtung angeordnet sein. In X-Richtung ist die Werkzeugaufnahme 21 möglichst nah an der Durchschiebeeinrichtung 10 positioniert, sodass die Anpresskraft des Fließbohrers 33 eine möglichst geringe Hebelkraft auf das stabförmige Werkstück 2 ausübt. Die Durchschiebeeinrichtung 10 kann das Werkstück 2 besser in Y-Richtung abstützen als die Werkstückaufnahmen 14. Bei einer Anbringung der Werkzeugaufnahme 21 neben dem Bearbeitungskopf 17 mit Vorschubrichtung in Z-Richtung wäre eine Abstützung des zu bearbeitenden Werkstücks 2 durch die Werkstückaufnahme 14 ausreichend und die Durchschiebeeinrichtung 10 könnte entfallen. Ebenso ist es denkbar, die Werkstückabstützung 14 so auszuführen, dass eine ausreichende Abstützung in Y-Richtung gegeben ist und die Durchschiebeeinrichtung 10 entfallen zu lassen.

In Figur 3 ist perspektivisch ein stabförmiges Werkstück 2 dargestellt. In dieses Werkstück 2 ist die Ausnehmung 31 eingebracht. Die Ausnehmung 31 weist eine polygone Kontur auf. Diese ist beispielsweise an die Oberflächenkrümmung des Werkstücks 2 angepasst, wobei entlang der Längsachse beispielsweise ein größerer Wandabschnitt ausgeschnitten wurde, als in radialer Erstreckungsrichtung. Hierbei sind beliebige polygonale oder auch ovale Formen möglich. Durch die Herstellung der Ausnehmung 31 mittels des Laserstrahls 16 können solche verschiedene und an die Geometrien des Werkstücks 2 angepasste Ausnehmungen 31 eingebracht werden. Dies weist den Vorteil auf, dass durch ein darauffolgendes Aufweiten der Ausnehmung 31 auf ein Endmaß des Bohrloches 34 verringerte axiale Kräfte, die durch den Fließbohrer 33 auf das Werkstück 2 wirken, aufgenommen werden müssen.

In den Figuren 4a bis f sind verschiedene Konturen der Ausnehmung 31 dargestellt. Figur 4a zeigt beispielsweise eine nicht zur Erfindung gehörige runde Kontur der Ausnehmung 31. Die weiteren Figuren 4b bis f zeigen polygone Konturen S. Figur 4b zeigt eine kreuzförmige Ausnehmung 31, Figur 4c eine dreiecksförmige Ausnehmung 31, Figur 4d bis f verschiedene sternförmige Ausnehmungen 31.

Besonders bevorzugt bei radiärsymmetrischen Ausnehmungen 31 sind ungeradzählig radiärsymmetrische Ausnehmungen 31, wie in Figur 4c bis f dargestellt, da hierdurch die Laufruhe des Fließlochbohrers bei der Herstellung des Bohrloches 34 verbessert werden kann.

Durch die Einbringung der Ausnehmung 31 als Vorbereitungsschritt für das Herstellen des Bohrloches 34 auf Endmaß kann aufgrund der Verwendung eines Laserstrahls des Weiteren eine präzise Ausrichtung der Ausnehmung in das Werkstück 2 ermöglicht sein.

In Figur 5a sind die Wandabschnitte 36 parallel ausgerichtet bzw. ist eine gerade Ausnehmung 31 gebildet. In Figur 5b ist ein sich verjüngender Verlauf der einander gegenüberliegenden Wandabschnitte 36 und in Figur 5c ein sich aufweitender oder verbreiternder Verlauf der Wandabschnitte 36 dargestellt, welche sich beim Einbringen einer Ausnehmung 31 durch Laserschneiden erzeugen lassen. Durch eine geeignete Wahl des Wandverlaufs lässt sich die Ausnehmung 31 weiter auf die Topografie des Werkstücks 2 anpassen. Es ist auch möglich, dass die Flankensteigung des Wandverlaufs entlang dem Umfang der Ausnehmung 31 variiert.

In Figur 6 ist eine schematische Schnittansicht eines Bohrloches 34 dargestellt, bei welchem in einem ersten Schritt mittels des Laserstrahls 16 die Ausnehmung 31 eingebracht wurde, die einen kleineren Hüllkreis aufweist als das Endmaß des Bohrloches 34. Anschließend wird mit dem Fließbohrer 33 das Bohrloch 34 gebildet, wobei während der Herstellung des Bohrloches 34 durch den Fließbohrer 33 ein Aufwurf 37 gebildet wird. Dieser Aufwurf 37 kann durch einen Ringbund 38 am Fließbohrer 33 (Figur 2) eine definierte Kontur aufweisen, so dass eine Außenseite des Werkstücks 2 mit einer definierten Kontur hergestellt wird. Die Höhe des Aufwurfs 37 lässt sich zudem durch die Geometrie des Bohrloches 34 beeinflussen. So wird der Aufwurf 37 kleiner, je kleiner die Differenz des Hüllkreises der Ausnehmung 31 und des Bohrlochs 34 ist. Weiter lässt sich die Höhe des Aufwurfs 37 verringern, indem eine Ausnehmung 31 mit einem sich verjüngenden Verlauf der Ausnehmungswand 36 gemäß Figur 5b gewählt wird.

Gegenüberliegend des Aufwurfs 37 wird durch das Fließbohren ein Kragen 39 gebildet. Die Länge des Kragens 39 steht in Abhängigkeit des zu verdrängenden Materials aufgrund der Differenz der Abmessung der Ausnehmung 31 und des Endmaßes des Bohrloches 34 und lässt sich somit durch eine geeignete Wahl der Geometrie der Ausnehmung 31 einstellen.

Das Herstellen des Bohrloches 34 durch das Fließbohren weist insbesondere bei dünnwandigen Werkstücken 2, also sowohl bei stabförmigen, insbesondere bei rohrförmigen Werkstücken als auch bei plattenförmigen Werkstücken, den Vorteil auf, dass ein gegenüber der Wandstärke des Werkstücks 2 verlängertes Bohrloch 34 gebildet ist. Dadurch kann eine verbesserte Aufnahme von einem eingesetzten Gegenstand gegeben sein.

Darüber hinaus kann die Länge eines herzustellenden Gewinde 41, wie dies in Figur 7 dargestellt ist, gegenüber der Wandstärke des Werkstücks 2 vergrößert sein, wodurch eine erhöhte Befestigungskraft gegeben ist. Das Gewinde 41 gemäß Figur 7 kann sowohl durch ein Gewindeschneidwerkzeug, als auch ein Gewindeformwerkzeug in das Bohrloch 34 eingebracht werden.

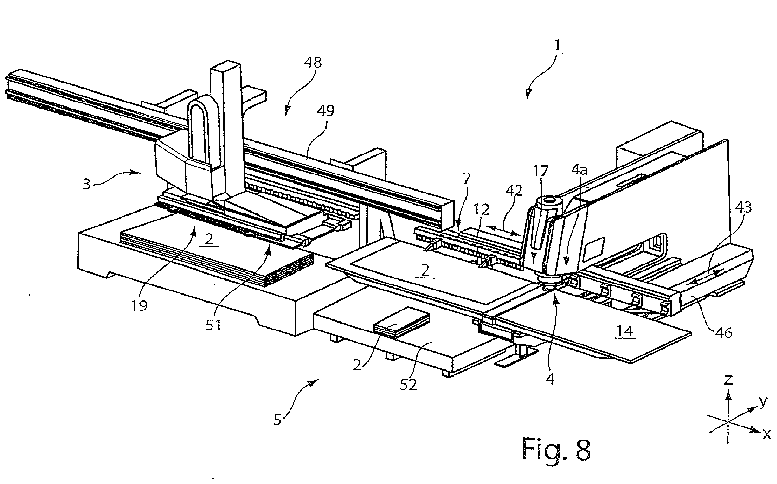

In Figur 8 ist eine alternative Ausführungsform der Laserbearbeitungsmaschine 1 zu Figur 1 dargestellt. Diese Laserbearbeitungsmaschine 1 ist zur Bearbeitung von plattenförmigen Werkstücken 2 vorgesehen. Hierbei handelt es sich um eine sogenannte Flachbett-Laserstanzbearbeitungsmaschine.

Diese Laserbearbeitungsmaschine 1 weist eine ortsfeste Laserbearbeitungsvorrichtung 4 auf, die den Bearbeitungskopf 17 zur Führung des Laserstrahls 16 und einen Stanzkopf 44 aufnimmt. Das zu bearbeitende plattenförmige Werkstück 2 liegt auf einer Werkstückabstützung 14, insbesondere einer flächigen Werkstückauflage 14, auf. Das Werkstück 2 wird während der Bearbeitung mit einer Werkstückbewegungseinrichtung 7 gehalten, welche motorisch angetrieben ist und eine Verfahrbewegung des plattenförmigen Werkstücks 2 in der Ebene der Werkstückabstützung 14 und relativ zum Bearbeitungskopf 17 und/oder Stanzkopf 44 ansteuert. Hierfür ist die Spanneinrichtung 12 in Form von Klammern vorgesehen. Durch die Werkstückbewegungseinrichtung 7 wird das plattenförmige Material bzw. Werkstück 2 gemäß dem Doppelpfeil 42 in und entgegen der X-Richtung bewegt. Die Werkstückabstützung 14 kann relativ zu einem Grundgestell 46 gemäß dem Doppelpfeil 43 in und entgegen der Y-Richtung verfahren werden, die Werkstückbewegungseinrichtung 7 wird hierbei mitverfahren. Ein Bearbeitungsbereich bzw. ein Bearbeitungsraum 20 liegt zwischen dem Stanzkopf 44 und einer nicht näher dargestellten Stanzmatrize, welche dem Stanzkopf 44 zugeordnet ist. Sowohl der Stanzkopf 44 als auch die Stanzmatrize sind auswechselbar.

Der Werkstückabstützung 14 der Bearbeitungsmaschine 1 ist an einer Stirnseite eine Handlingseinrichtung 48 zugeordnet, welche eine Zuführeinrichtung 3 umfasst, durch welche das plattenförmige Material von einer Beladevorrichtung 19 entnommen und über eine Linearachse 49 der Bearbeitungsmaschine 1 zugeführt wird. Diese Zuführeinrichtung 3 kann auch als eine Entnahmeeinrichtung dienen, um das oder die bearbeiteten plattenförmigen Werkstücke 2 von der Werkstückabstützung 14 zu entnehmen und in einer Entladevorrichtung 5 abzulegen. Die Entladevorrichtung 5 kann beispielsweise ein Magazin 52 umfassen, in welchem die bearbeiteten Werkstücke 2 mittels der Handlingsvorrichtung 48 abgelegt werden.

In einem innerhalb der Bearbeitungsvorrichtung 4 vorgesehenen Magazin für Werkzeuge und/oder Werkzeughalter kann die Werkzeugaufnahme 21 bereitgestellt werden, so dass beispielsweise durch die Auswechslung des Stanzkopfes 44 mit der Werkzeugaufnahme 21 ein Fließbohrer 33 aufgenommen und der Bearbeitungsstelle F zugeführt werden kann. Bei dieser Ausführungsform ist vorgesehen, dass der Laserstrahl 16 und die Werkzeugaufnahme 21, insbesondere der Fließbohrer 33 bezüglich seiner Längsachse parallel und benachbart zueinander ausgerichtet sind, so dass die Bearbeitungsrichtung gleich ist. Durch eine Verfahrbewegung der Werkstückbewegungseinrichtung 7 wird das plattenförmige Werkstück 2 nach dem Einbringen der Ausnehmung 31 durch den Laserstrahl 16 zur Werkstückaufnahme 21 verfahren, so dass darauffolgend der Fließbohrer 33 in die Ausnehmung 31 eingeführt und das Bohrloch 34 hergestellt werden kann.

## Patentansprüche

1. Verfahren zur schneidenden Bearbeitung von plattenförmigen oder stabförmigen Werkstücken (2) in einer Bearbeitungsmaschine (1), mit einer Laserbearbeitungsvorrichtung (4), mit einer Werkstückbewegungseinrichtung (7), mittels derer ein in der Laserbearbeitungsvorrichtung (4) zu bearbeitendes Werkstück (2) gehalten und relativ zur Laserbearbeitungsvorrichtung (4) bewegt wird, **dadurch gekennzeichnet,**
- **dass** mit einem Bearbeitungskopf (17) ein Laserstrahl (16) auf das zu bearbeitende Werkstück (2) gerichtet und eine Ausnehmung (31) in das Werkstück (2) eingebracht wird,
- **dass** durch den Laserstrahl (16) die Ausnehmung (31) mit einer polygonen Kontur (S) oder einer unrunden Kontur hergestellt wird, und
- **dass** die Ausnehmung (31) mit einem Fließbohrer (33) bearbeitet und auf ein Endmaß eines Bohrloches (34) aufgeweitet wird.

2. Verfahren nach Anspruch 1, **dadurch gekennzeichnet, dass** die Ausnehmung (31) mit einer maximalen Größe in das Werkstück (2) eingebracht wird, deren Hüllkreis kleiner als das Endmaß des Bohrlochs (34) ist.

3. Verfahren nach Anspruch 1 oder 2, **dadurch gekennzeichnet, dass** in das Bohrloch (34) durch ein Gewindeschneidwerkzeug oder ein Gewindeformwerkzeug ein Gewinde (41) eingebracht wird.

4. Verfahren nach einem der vorhergehenden Ansprüche, **dadurch gekennzeichnet, dass** durch den Laserstrahl (16) eine Ausnehmung (31) mit parallelen, sich verjüngenden oder sich aufweitenden, die Ausnehmung (31) begrenzenden Wandabschnitt (36) in das Werkstück (2) eingebracht wird.

5. Verfahren nach einem der vorhergehenden Ansprüche, **dadurch gekennzeichnet, dass** die Kontur der Ausnehmung (31) und/oder die Flankensteigung des die Ausnehmung (31) begrenzenden Wandabschnitts (36) in Abhängigkeit der Topografie, insbesondere der Oberflächenkrümmung, des zu bearbeitenden Werkstücks (2) gewählt werden.

6. Verfahren nach einem der vorhergehenden Ansprüche, **dadurch gekennzeichnet, dass** in einer Stanz-Laser-Bearbeitungsmaschine mit einer als Flachbett ausgebildeten Werkstückabstützung (14) das plattenförmige Werkstück (2) bearbeitet wird.

7. Verfahren nach einem der Ansprüche 1 bis 4, **dadurch gekennzeichnet, dass** in einer Laserrohrschneidmaschine mit einer das Werkstück (2) abstützenden Durchschiebeeinrichtung (10) das stabförmige, insbesondere rohrförmige Werkstück (2) bearbeitet wird.

8. Verfahren nach Anspruch 7, **dadurch gekennzeichnet, dass** die sich gegenüberliegenden Wandabschnitte (36) der Ausnehmung (31) in einer Vorschubrichtung (11) der Laserrohrschneidmaschine eine andere Flankensteigung und/oder eine andere Distanz zueinander aufweisen als die sich gegenüberliegenden Wandabschnitte (36) der Ausnehmung (31) in einer Drehrichtung (13) der Laserrohrschneidmaschine.

## Claims

1. Method for the cutting processing of plate-shaped or rod-shaped workpieces (2) in a processing machine (1), with a laser processing device (4), with a workpiece moving device (7), by means of which a workpiece (2) to be processed in the laser processing device (4) is held and moved relative to the laser processing device (4), **characterized in that** a processing head (17) is used to direct a laser beam (16) onto the workpiece (2) to be processed and to introduce a recess (31) into the workpiece (2),
- **in that** the laser beam (16) produces the recess (31) with a polygonal contour (S) or a non-circular contour, and
- that the recess (31) is machined with a flow drill (33) and widened to a final dimension of a drilled hole (34).

2. Method according to claim 1, **characterized in that** the recess (31) is introduced into the workpiece (2) with a maximum size whose enveloping circle is smaller than the final dimension of the drilled hole (34) .

3. Method according to claim 1 or 2, **characterized in that** a thread (41) is introduced into the drilled hole (34) by a thread-cutting tool or a thread-forming tool.

4. Method according to one of the preceding claims, **characterized in that** a recess (31) with parallel, tapering or widening wall section (36) delimiting the recess (31) is introduced into the workpiece (2) by the laser beam (16).

5. Method according to one of the preceding claims, **characterized in that** the contour of the recess (31) and/or the flank pitch of the wall section (36) delimiting the recess (31) are selected as a function of the topography, in particular the surface curvature, of the workpiece (2) to be machined.

6. Method according to one of the preceding claims, **characterized in that** the plate-shaped workpiece (2) is processed in a punch laser processing machine with a workpiece support (14) designed as a flat bed.

7. Method according to one of claims 1 to 4, **characterized in that** the rod-shaped, in particular tubular, workpiece (2) is processed in a laser tube cutting machine with a push-through device (10) supporting the workpiece (2).

8. Method according to claim 7, **characterized in that** the opposing wall sections (36) of the recess (31) in a feed direction (11) of the laser tube cutting machine have a different flank pitch and/or a different distance from one another than the opposing wall sections (36) of the recess (31) in a direction of rotation (13) of the laser tube cutting machine.

## Revendications

1. Procédé d'usinage par coupe de pièces (2) en forme de plaques ou de barres dans une machine d'usinage (1), avec un dispositif d'usinage au laser (4), avec un dispositif de déplacement de pièce (7), au moyen duquel une pièce (2) à usiner dans le dispositif d'usinage au laser (4) est maintenue et déplacée par rapport au dispositif d'usinage au laser (4), **caractérisé,**
- **en ce qu'**un faisceau laser (16) est dirigé avec une tête d'usinage (17) sur la pièce à usiner (2) et qu'un évidement (31) est pratiqué dans la pièce (2) ,
- **en ce que** l'évidement (31) est réalisé par le rayon laser (16) avec un contour polygonal (S) ou un contour non rond, et
- **en ce que** l'évidement (31) est usiné à l'aide d'un foret fluide (33) et élargi à une dimension finale d'un trou de forage (34).

2. Procédé selon la revendication 1, **caractérisé en ce que** l'évidement (31) est réalisé dans la pièce (2) avec une taille maximale dont le cercle enveloppe est inférieur à la dimension finale du trou de perçage (34).

3. Procédé selon la revendication 1 ou 2, **caractérisé en ce qu'**un filetage (41) est réalisé dans le trou de perçage (34) par un outil de taraudage ou un outil de déformation de filetage.

4. Procédé selon l'une des revendications précédentes, **caractérisé en ce que** le faisceau laser (16) permet de réaliser dans la pièce (2) un évidement (31) dont la portion de paroi (36) délimitant l'évidement (31) est parallèle, effilée ou évasée.

5. Procédé selon l'une des revendications précédentes, **caractérisé en ce que** le contour de l'évidement (31) et/ou le pas de flanc de la portion de paroi (36) délimitant l'évidement (31) sont choisis en fonction de la topographie, notamment de la courbure de surface, de la pièce (2) à usiner.

6. Procédé selon l'une des revendications précédentes, **caractérisé en ce que** la pièce à usiner (2) en forme de plaque est usinée dans une machine d'usinage laser de poinçonnage avec un support de pièce à usiner (14) conçu comme un lit plat.

7. Procédé selon l'une des revendications 1 à 4, **caractérisé en ce que** la pièce (2) en forme de barre, en particulier en forme de tube, est usinée dans une machine de découpe de tubes au laser comportant un dispositif de poussée (10) soutenant la pièce (2).

8. Procédé selon la revendication 7, **caractérisé en ce que** les sections de paroi (36) de l'évidement (31) qui se font face dans un sens d'avancement (11) de la machine de découpe de tubes laser présentent un autre pas de flanc et/ou une autre distance entre elles que les sections de paroi (36) de l'évidement (31) qui se font face dans un sens de rotation (13) de la machine de découpe de tubes laser.
